# EUROPÄISCHE PATENTSCHRIFT

(11) **EP 4 563 964 B1**
(45) Veröffentlichungstag und Bekanntmachung des Hinweises auf die Patenterteilung: **15.04.2026**
(21) Anmeldenummer: 23213679.6
(22) Anmeldetag: 01.12.2023
(51) Int. Cl.: G01M 13/021, G01M 13/025, G01M 13/028, B23F 23/12

(54) **VERFAHREN UND FERTIGUNGSSYSTEM**
METHOD AND MANUFACTURING SYSTEM
PROCÉDÉ ET SYSTÈME DE FABRICATION

(43) Veröffentlichungstag der Anmeldung: 04.06.2025
(73) Patentinhaber: Klingelnberg AG, 8050 Zürich (CH)
(72) Erfinder: Finkeldey, Markus, 45527 Hattingen (DE)
(74) Vertreter: Janke Scholl Patentanwälte PartG mbB

(56) Entgegenhaltungen:
- DE-A1- 102021 107 888

## Beschreibung

Die vorliegende Erfindung betrifft ein Verfahren, mit den Verfahrensschritten: Wälzprüfung von verzahnten Bauteilen und Verzahnungsmessung zumindest einer Teilmenge der verzahnten Bauteile. Weiter betrifft die Erfindung ein Fertigungssystem.

In modernen Kraftfahrzeugen, die teilweise oder vollständig elektromotorisch angetrieben sind, wird das Getriebegeräusch im elektromotorischen Fahrbetrieb nicht mehr durch das Geräusch eines Verbrennungsmotors maskiert. Getriebegeräusche sind demnach deutlicher hörbar und können von Fahrzeuginsassen als störend empfunden werden.

Es ist bekannt, alle gefertigten Verzahnungen einer Wälzprüfung bzw. Geräuschprüfung auf einem Wälzprüfstand zu unterziehen. Falls eine Verzahnung geräuschauffällig ist, erfolgt eine Verzahnungsmessung der betreffenden Verzahnung auf einer Koordinaten- bzw. Verzahnungsmessmaschine. Weiter werden Verzahnungen stichprobenartig auf der Verzahnungsmessmaschine gemessen.

Der zeitlich limitierende Faktor der voranstehend skizzierten Vorgehensweise ist die Messdauer der häufig rein taktil arbeitenden Verzahnungsmessmaschine. Die Messung der relevanten Verzahnungsparameter, inklusive der bezüglich des Geräuschverhaltens wichtigen Welligkeitsanalyse, erfordert mittels eines taktilen Messsystems einer Verzahnungsmessmaschine, je nach Bauteilgeometrie, bis zu 20 Minuten. Es ist ersichtlich, dass aufgrund dieser Messdauer nicht alle Bauteile im Rahmen einer Serienfertigung taktil gemessen werden können.

Hybride Verzahnungsmessmaschinen setzen sowohl optische als auch taktile Messeinrichtungen zur Koordinatenmessung ein. Zwar kann der Einsatz optischer Messeinrichtungen die Messzeit gegenüber rein taktil messenden Systemen reduzieren. Eine vollständige Messung aller relevanten Parameter erfordert jedoch immer noch deutlich mehr Messzeit, als es der Takt der Verzahnmaschine vorgeben würde. Die Begriffe "Messzeit" und "Messdauer" werden im vorliegenden Text synonym verwendet.

Trotz der voranstehenden Herausforderungen bezüglich der Messdauer besteht die ständige Forderung nach einer weiter verbesserten Qualitätskontrolle im Hinblick auf das Geräuschverhalten von Verzahnungen. Dies kann z.B. durch eine Erhöhung des Messumfangs, d.h. der Anzahl der an einer Verzahnung gemessenen Parameter, und auch durch eine Erhöhung des Stichprobenumfangs, d.h. der Anzahl der gemessenen Verzahnungen erfolgen, und zwar bis hin zu einer Messung aller gefertigten Verzahnungen.

Sofern taktile Verzahnungsmesssysteme zur Verzahnungsmessung verwendet werden, ergibt sich durch die voranstehenden Maßnahmen eine weiter deutliche Erhöhung der Messdauer. Selbst die Verwendung einer hybriden Verzahnungsmessmaschine führt für das Beispiel der Messung aller gefertigten Verzahnungen nicht zum Ziel. So beträgt die Messdauer für die Parameter "Teilung", "Profil" "Flanke" und "Welligkeit" inklusive der Erfassung von Hilfsgrößen, wie der Achslage oder dergleichen, und des Bestückens der hybriden Verzahnungsmessmaschine ca. 2 - 3 Minuten. Der Maschinentakt gibt jedoch zum Teil eine verfügbare Messdauer von unter 60 Sekunden vor. D.h. obwohl die hybride Messung eine deutliche Einsparung der Messdauer bewirken kann, ist diese dennoch weit entfernt vom Maschinentakt.

Vor diesem Hintergrund liegt der vorliegenden Erfindung die technische Problemstellung zugrunde, ein Verfahren zur Bearbeitung von verzahnten Bauteilen anzugeben, das eine verbesserte Geräuschkontrolle ermöglicht. Weiter soll ein Fertigungssystem angegeben werden.

DE 10 2021 107888 A1 offenbart ein Verfahren zum Hartfeinbearbeiten einer Verzahnung oder eines Profils eines Werkstücks mit einer Wälzprüfung und einer Verzahnungsmessung.

Die voranstehend beschriebene technische Problemstellung wird jeweils mit den Merkmalen der unabhängigen Ansprüche gelöst. Weitere Ausgestaltungen der Erfindung ergeben sich aus den abhängigen Ansprüchen und der nachstehenden Beschreibung.

Erfindungsgemäß wird ein Verfahren angegeben, mit den Verfahrensschritten: Wälzprüfung von verzahnten Bauteilen und Verzahnungsmessung zumindest einer Teilmenge der verzahnten Bauteile. Das Verfahren zeichnet sich dadurch aus, dass ein Messbedarf und ein Umfang der Verzahnungsmessung bauteilspezifisch in Abhängigkeit von einem Ergebnis der Wälzprüfung bestimmt werden.

D.h. es wird für ein betreffendes Bauteil zunächst in Abhängigkeit von einem Ergebnis der Wälzprüfung dieses Bauteils bestimmt, ob dieses Bauteil mittels einer Verzahnungsmessung gemessen wird oder nicht, also der Messbedarf ermittelt. Das Bestimmen des Messbedarfs ist daher eine Ja-Nein-Entscheidung, wobei das Bauteil entweder der Verzahnungsmessung übergeben wird oder nicht der Verzahnungsmessung übergeben wird.

Sofern ein Messbedarf vorliegt, betrifft das Bestimmen des Umfangs der Verzahnungsmessung insbesondere die Festlegung der an dem Bauteil zu messenden Parameter, wie z.B. der Teilung, des Rundlaufs oder dergleichen. Denn Untersuchungen der Anmelderin haben gezeigt, dass bestimmten, mittels der Wälzprüfung gemessenen, dynamischen Auffälligkeiten bzw. dynamischen Abweichungen der Verzahnung bestimmte geometrische Abweichungen der Verzahnung zuzuordnen sind. Der Begriff "Umfang" bezeichnet dabei somit nicht eine Dimension im Sinne eines geometrischen Umfangs des Bauteils, sondern die Spezifikation bzw. Zusammenstellung der zu messenden Prüfmerkmale bzw. Parameter einer Messung an diesem Bauteil - d.h. die Messaufgabe.

Ergibt die Wälzprüfung beispielsweise, dass die dynamischen Auffälligkeiten der Verzahnung nicht aus einer Welligkeit der Zahnflanken sondern aus einem Teilungsfehler resultieren, kann für das betreffende Bauteil auf die zeitintensive Welligkeitsmessung verzichtet werden. Mit anderen Worten können auf Grundlage des Ergebnisses der Wälzprüfung diejenigen geometrischen Parameter erkannt und die Messaufgabe bauteilspezifisch auf diese geometrischen Parameter beschränkt werden, die für auffällige dynamischen Abweichungen der Verzahnung relevant sind.

So kann die Messdauer insgesamt reduziert werden, da für jedes Bauteil, für das ein Messbedarf vorliegt, nur der bauteilspezifische Messumfang in der Verzahnungsmessung durchgeführt wird.

Es kann daher vorgesehen sein, dass für die Verzahnung der herzustellenden Bauteile ein vollständiger Messparametersatz definiert ist, der die Gesamtheit derjenigen Parameter für die Verzahnungsmessung umfasst, die alle relevanten geometrischen Abweichungen für diese Verzahnung abdecken, wie z.B. die Parameter: Teilung, Rundlauf, Taumel, Flankenform, Profilform, Winkelabweichungen in Profil- und Flankenrichtung, Zahndickenabweichung, Oberflächenwelligkeit bzw. Topographieabweichungen und dergleichen.

Weiter kann vorgesehen sein, dass bauteilspezifisch ein Messparametersatz ausgewählt wird, der eine Auswahl bzw. eine Teilmenge dieses vollständigen Messparametersatzes ist, wobei zumindest ein Parameter oder mehrere Parameter dieses vollständigen Messparametersatzes nicht Teil des bauteilspezifisch bestimmten Messparametersatzes sind. Auf diese Weise kann jedes Bauteils bedarfsgerecht mit der geringstmöglichen Messdauer gemessen werden, wobei nur die bauteilspezifisch erforderlichen Parameter gemessen werden.

Mit anderen Worten kann die Messaufgabe für die Verzahnungsmessung bauteilspezifisch anhand des Ergebnisses der Wälzprüfung dieses Bauteils optimiert werden. Insbesondere kann die Messaufgabe für die Verzahnungsmessung bauteilspezifisch ausgehend von dem vollständigen Messparametersatz reduziert werden.

Der Begriff des "vollständigen Messparametersatzes" ist hier lediglich zum leichteren Verständnis eingeführt worden. So hat z.B. jede Verzahnungsmessmaschine einen bestimmten Funktionsumfang, auf den für jede zu messende Verzahnung zurückgegriffen werden kann. Es ist daher auch ohne die Definition eines "vollständigen Messparametersatzes" ohne weiteres möglich, den Umfang der Messung bauteilspezifisch anzupassen, in dem aus dem zur Verfügung stehenden Funktionsumfang der Verzahnungsmessmaschine bauteilspezifisch ausgewählt wird. Auch auf diese Weise ergibt sich ein bauteilspezifischer Messumfang, in dem für ein erstes Bauteil auf Grundlage der Wälzprüfung z.B. eine Teilungsmessung ohne Welligkeitsmessung durchgeführt wird, während für ein zweites Bauteil auf Grundlage der Wälzprüfung die Welligkeitsmessung durchgeführt wird. Eine Definition eines Pools bestimmter Parameter, die für die Verzahnungsmessung sinnvoll sein können, und aus dem dann bauteilspezifisch ausgewählt werden kann, kann somit als Verfahrensschritt vorbereitend durchgeführt worden sein, ist aber in keiner Weise zwingend für den Erfolg oder die Durchführung des gegenständlichen Verfahrens notwendig.

Es kann vorgesehen sein, dass für jedes Bauteil eine Wälzprüfung durchgeführt wird. Man spricht in diesem Fall bezüglich der Wälzprüfung von einer 100%-Prüfung. D.h. jedes Bauteil wird nach seiner Hartfeinbearbeitung der Wälzprüfung unterzogen.

Gemäß einer Ausgestaltung des Verfahrens ist vorgesehen, dass eine Anzahl der Bauteile, für die die Wälzprüfung durchgeführt wird, größer ist als eine Anzahl der Bauteile, für die die Verzahnungsmessung durchgeführt wird. Die Verzahnungsmessung ist daher keine 100%-Prüfung. D.h. nicht jedes Bauteil wird nach seiner Hartfeinbearbeitung der Verzahnungsmessung unterzogen.

Es kann vorgesehen sein, dass für ein Bauteil, dessen Ergebnis der Wälzprüfung vorgegebene Qualitätsanforderungen der Wälzprüfung erfüllt, kein Messbedarf vorliegt und keine Verzahnungsmessung durchgeführt wird, und dass für ein Bauteil, dessen Ergebnis der Wälzprüfung die vorgegebenen Qualitätsanforderungen der Wälzprüfung nicht erfüllt, ein Messbedarf vorliegt und eine Verzahnungsmessung durchgeführt wird.

Gemäß einer Ausgestaltung des Verfahrens ist vorgesehen, dass mittels der Wälzprüfung ermittelte Abweichungen als Ordnungsspektrum bereitgestellt werden, wobei einzelnen Ordnungen und/oder Ordnungsbereichen des Ordnungsspektrums Prüfmerkmale der Verzahnung zugeordnet sind, wie Rundlauffehler; Taumel; Teilungsfehler erster Ordnung und/oder höherer Ordnungen; Oberflächenwelligkeiten, Fehler der Flankenform oder dergleichen.

Die Ordnungen sind dabei in bekannter Weise insbesondere als ein Vielfaches der Drehzahl definiert. Unter Ordnungsanalyse ist die Analyse von Drehfrequenzen und deren Vielfachen zu verstehen - mit dem Ordnungsspektrum als Ergebnis einer solchen Ordnungsanalyse. Mit anderen Worten handelt es sich dabei insbesondere um die Transformation einer Frequenzanalyse aus einer zeitlichen Ebene in eine rotatorische Ebene. Die erste Ordnung entspricht insbesondere der Drehfrequenz während der Wälzprüfung, die zweite Ordnung der doppelten Drehfrequenz der Wälzprüfung etc.. Ordnungsspektren können sich z.B. auf die Drehzahl bzw. Drehfrequenz des verzahnten Bauteils beziehen, auf die Drehzahl bzw. Drehfrequenz des Lehrzahnrads, auf die Zahneingriffsfrequenz oder dergleichen. Ordnungsspektren können daher ineinander umgerechnet werden, ohne dass Informationen verloren gehen.

Es kann vorgesehen sein, dass anhand dominanter Ordnungen des Ordnungsspektrums bauteilspezifisch diejenigen Prüfmerkmale bzw. die zu messenden Parameter der Verzahnung ermittelt werden, die in der Verzahnungsmessung gemessen werden.

Gemäß einer Ausgestaltung des Verfahrens ist vorgesehen, dass insbesondere anhand dominanter Ordnungen ein Rückschluss auf einen Korrekturbedarf für bestimmte Prüfmerkmale bzw. zu messenden Parameter erfolgt, so dass ausgehend von der Wälzprüfung auf das Vorliegen bestimmter Verzahnungsfehler geschlossen werden kann, insbesondere auf das Vorliegen bestimmter geometrischer Verzahnungsfehler geschlossen werden kann.

Es kann vorgesehen sein, dass diejenigen Prüfmerkmale bzw. die zu messenden Parameter, für die in der Wälzprüfung keine dominanten Frequenzen ermittelt worden sind, keine Verzahnungsmessung durchgeführt wird.

Die Qualitätsanforderungen der Wälzprüfung können absolute oder relative Grenzwerte für Amplituden einer oder mehrerer Frequenzen des Ordnungsspektrums aufweisen.

Es kann vorgesehen sein, dass ein erster Bereich des Ordnungsspektrums ein Indikator für eine erste Verzahnungsabweichung ist und dass ein zweiter Bereich des Ordnungsspektrums ein Indikator eine zweite, von der ersten Verzahnungsabweichung verschiedene zweite Verzahnungsabweichung ist, wobei dem ersten Bereich zugehörige Ordnungen kleiner sind als dem zweiten Bereich zugehörige Ordnungen und wobei eine Auffälligkeit einer Ordnung im ersten Bereich einen Messbedarf für die erste Verzahnungsabweichung auslöst und eine Auffälligkeit einer Ordnung im zweiten Bereich einen Messbedarf für die zweite Verzahnungsabweichung auslöst.

Gemäß einer Ausgestaltung des Verfahrens kann vorgesehen sein, dass ein erster Bereich des Ordnungsspektrums ein Indikator für Teilungsfehler ist und dass ein zweiter Bereich des Ordnungsspektrums ein Indikator für Abweichungen der Welligkeit ist, wobei dem ersten Bereich zugehörige Ordnungen kleiner sind als dem zweiten Bereich zugehörige Ordnungen und wobei eine Auffälligkeit einer Ordnung im ersten Bereich einen Messbedarf für eine Teilungsmessung auslöst und eine Auffälligkeit einer Ordnung im zweiten Bereich einen Messbedarf für eine Welligkeit auslöst.

Es kann vorgesehen sein, dass eine einzelne Ordnung des Ordnungsspektrums ein Indikator für eine dieser einzelnen Ordnung zugeordnete Verzahnungsabweichung ist und dass eine weitere einzelne Ordnung des Ordnungsspektrums ein Indikator für eine zweite, von der ersten Verzahnungsabweichung verschiedene, dieser weiteren einzelnen Ordnung zugeordnete weitere Verzahnungsabweichung ist, wobei die einzelne Ordnung von der weiteren einzelnen Ordnung verschieden ist und wobei eine Auffälligkeit der einzelnen Ordnung einen Messbedarf für die dieser Ordnung zugeordnete Verzahnungsabweichung auslöst und eine Auffälligkeit der weiteren einzelnen Ordnung einen Messbedarf für die dieser weiteren einzelnen Ordnung zugeordnete weitere Verzahnungsabweichung auslöst.

Gemäß einer Ausgestaltung des Verfahrens ist vorgesehen, dass anhand der Ergebnisse der Wälzprüfung und/oder der Ergebnisse der Verzahnungsmessung Korrekturen für die Hartfeinbearbeitung bestimmt werden. Hierbei kann es sich bekannterweise um ein sogenanntes Verfahren handeln, wobei ausgehend von gemessenen Abweichungen der Verzahnung Korrekturwerte z.B. für Achspositionen oder Vorschübe für das Hartfeinbearbeitungsverfahren bestimmt werden, um die gemessenen Abweichungen auszugleichen.

Es kann vorgesehen sein, dass für ein jeweiliges Bauteil nach der Verzahnungsmessung eine End-of-Line Prüfung mittels eines End-Of-Line Prüfstands erfolgt, wobei der End-of-Line Prüfstand insbesondere ein Getriebeprüfstand ist, oder für ein jeweiliges Bauteil nach der Wälzprüfung und ohne vorhergehende Verzahnungsmessung die End-of-Line Prüfung der Verzahnung mittels des End-Of-Line Prüfstands erfolgt. Es kann vorgesehen sein, dass jede Verzahnung dem End-of-Line Prüfstand zugeführt und dem End-of-Line Prüfstand geprüft wird. So kann für den End-of-Line Prüfstand insbesondere von einer 100 % Prüfung gesprochen werden.

Die Wälzprüfung ist keine End-of-Line Prüfung, sondern ein separater, von der End-of-Line Prüfung unabhängiger Verfahrensschritt, der auf einem separaten, von dem End-of-Line Prüfstand unabhängigen Wälzprüfstand durchgeführt wird.

Die Wälzprüfung unterscheidet sich zum Beispiel dadurch von der End-of-Line Prüfung, dass die zu prüfende Verzahnung während der Wälzprüfung nicht in einem Getriebegehäuse montiert ist. Demgegenüber ist die zu prüfende Verzahnung während der End-of-Line Prüfung in einem Getriebegehäuse montiert, um den fertig montierten Zustand der zu prüfenden Verzahnung zu testen, insbesondere mit dem entsprechenden Gegenrad, welches zusammen mit der zu prüfenden Verzahnung im fertig montierten Zustand verbaut sein wird. Hieraus ergibt sich ein weiterer Unterschied zwischen der End-of-Line Prüfung und der Wälzprüfung, da eine zu prüfende Verzahnung während der Wälzprüfung mit einem Lehrzahnrad abwälzt, und nicht mit der tatsächlichen im fertig montierten Zustand verbauten Verzahnung abwälzt.

Es kann vorgesehen sein, dass die verzahnten Bauteile vor der Wälzprüfung hartfeinbearbeitet werden, wobei die Hartfeinbearbeitung mittels einer Verzahnmaschine erfolgt.

Die Hartfeinbearbeitung kann ein Verfahren zum Zerspanen mit geometrisch unbestimmter Schneide sein.

Die Hartfeinbearbeitung kann ein Schleifverfahren sein. Die Hartfeinbearbeitung kann ein einzelteilendes oder ein kontinuierlich teilendes Schleifverfahren sein. Die Hartfeinbearbeitung kann ein Wälzschleifen oder ein Profilschleifen sein. Das Schleifwerkzeug zur Schleifbearbeitung kann eine Schleifschnecke oder eine Schleifscheibe sein. Das Schleifwerkzeug zur Schleifbearbeitung kann ein abrichtbares Schleifwerkzeug oder ein nicht abrichtbares Schleifwerkzeug sein. Bevorzugt kann die Hartfeinbearbeitung ein kontinuierliches Wälzschleifen mit einer abrichtbaren Schleifschnecke sein.

Die Hartfeinbearbeitung kann ein Verzahnungshonen sein.

Die Hartfeinbearbeitung kann ein Verzahnungsläppen sein.

Die Hartfeinbearbeitung kann einen oder mehrere Bearbeitungsschritte ausgewählt aus den Schritten "Schleifen", "Honen" oder "Läppen" aufweisen.

Die Verzahnmaschine kann eine Verzahnungsschleifmaschine sein. Die Verzahnungsschleifmaschine kann eine Abrichteinrichtung mit einem Abrichter zum Abrichten eines abrichtbaren Schleifwerkzeugs aufweisen.

Die Verzahnmaschine kann eine Verzahnungsläppmaschine sein.

Die Verzahnmaschine kann eine Verzahnungshonmaschine sein.

Gemäß einer Ausgestaltung des Verfahrens ist vorgesehen, dass die Wälzprüfung mittels des Prüfstands zur Wälzprüfung erfolgt.

Das Ergebnis der Wälzprüfung kann eine Drehfehleranalyse aufweisen.

Die Wälzprüfung kann eine Einflankenwälzprüfung sein. Der Prüfstand zur Wälzprüfung kann ein Prüfstand zur Einflankenwälzprüfung sein.

Die Einflankenwälzprüfung zeichnet sich dadurch aus, dass die zu prüfende Verzahnung und ein mit der zu prüfenden Verzahnung abwälzendes Lehrzahnrad des Prüfstands einen festen Achsabstand zueinander aufweisen. Das Lehrzahnrad und die zu prüfende Verzahnung befinden sich während der Prüfung zueinander in einem Einflankenkontakt. Es kann vorgesehen sein, dass die zu prüfende Verzahnung Prüfling wird mittels eines Motors drehangetrieben wird. Das Lehrzahnrad wird entsprechend gebremst, insbesondere mittels eines weiteren Motors, um ein Prüfdrehmoment und eine Prüfdrehzahl einzustellen oder um einen Prüfdrehmomentenverlauf und einen Drehzahlverlauf einzustellen. Auf einer Antriebswelle der zu prüfenden Verzahnung können ein Drehbeschleunigungsaufnehmer sowie ein inkrementelles Winkelmesssystem angeordnet sein. Geometrische Abweichungen der zu prüfenden Verzahnung erzeugen messbare Fehler in der Drehübertragung und der Drehbeschleunigung. Weiter können Schwingungssensoren zum Einsatz kommen.

Als Ergebnis der Einflankenwälzprüfung können z.B. angegeben werden: Rundlauf, Wälzabweichung, Rundlauffehler, Zahn-zu-Zahn Amplitude, maximale Wälzabweichung, Übertragungsfehler und dynamischer Backlash, Geräuschverhalten, Oberflächenfehler.

Die Wälzprüfung kann eine Zweiflankenwälzprüfung sein. Der Prüfstand zur Wälzprüfung kann ein Prüfstand zur Zweiflankenwälzprüfung sein. Die Zweiflankenwälzprüfung zeichnet sich dadurch aus, dass die zu prüfende Verzahnung und ein mit der zu prüfenden Verzahnung abwälzendes Lehrzahnrad des Prüfstands einen veränderlichen Achsabstand zueinander aufweisen. Das Lehrzahnrad und die zu prüfende Verzahnung befinden sich während der Prüfung zueinander in einem Zweiflankenkontakt. So wird eine Kraft aufgebracht, um z.B. das auf einer axial beweglichen Welle gelagerte Lehrzahnrad mit definierter Kraft in einen Zweiflankenkontakt mit der zu prüfenden Verzahnung zu pressen. Geometrische Abweichungen der zu prüfenden Verzahnung erzeugen messbare axiale Verlagerungen der auf einem Prüfschlitten gehaltenen Welle des Lehrzahnrads. Zu Messung können Weggeber, Drehgeber, Beschleunigungsaufnehmer und Schwingungssensoren verwendet werden.

Als Ergebnis der Zweiflankenwälzprüfung können z.B. angegeben werden: Achsabstand, Rundlauf, Wälzsprung, Wälzabweichung, Zweikugelmaß, Geräuschverhalten

Gemäß einer Ausgestaltung des Verfahrens ist vorgesehen, dass die Verzahnungsmessung mittels einer Koordinatenmessmaschine erfolgt. Die Koordinatenmessmaschine kann eine Verzahnungsmessmaschine sein.

Die Verfahren der Wälzprüfung mit Drehfehleranalyse, bzw. im Speziellen der Einflankenwälzprüfung und Zweiflankenwälzprüfung, sind Stand der Technik und sind hinlänglich bekannt. Kern der Erfindung ist nicht die Wälzprüfung bzw. die Einflankenwälzprüfung oder die Zweiflankenwälzprüfung, sondern die Verwendung der Ergebnisse einer solchen Wälzprüfung, insbesondere der Einflankenwälzprüfung oder der Zweiflankenwälzprüfung, um den Messbedarf und den Messumfang für eine Verzahnungsmessung bausteilspezifisch zu bestimmen. Die Erfindung betrifft daher insbesondere das wälzprüfgesteuerte Messen, wobei der Begriff "wälzprüfgesteuert" das Erkennen des Messbedarfs und des Messumfangs betrifft und der Messvorgang an sich nicht durch das Wälzprüfen gesteuert ist. Es kann daher auch von einem wälzprüfgetriggerten Verzahnungsmessen gesprochen werden, da die Ergebnisse der Wälzprüfung das bauteilspezifische Messen in der Prozesskette auslösen bzw. anhand der Ergebnisse der Wälzprüfung der Messbedarf und der Messumfang für die bauteilspezifische Verzahnungsmessung festgestellt werden.

Die Verzahnungsmessmaschine kann einen Drehtisch zum Aufnehmen und Rotieren einer zur messenden Verzahnung um eine Rotationsachse der Verzahnung aufweisen.

Die Verzahnungsmessmaschine kann eine taktile Messeinrichtung aufweisen. Die taktile Messeinrichtung kann einen Messtaster einer Tastkugel aufweisen, der dazu eingerichtet ist, mit einer zu messenden Verzahnung in Anlage gebracht zu werden. Taktile Messeinrichtung kann mehrere austauschbare Messtaster aufweisen, wobei die jeweiligen Messtaster mit Tastkugeln unterschiedlichen Durchmessers aufweisen. Die taktile Messeinrichtung kann nach dem messenden Prinzip oder nach dem schaltenden Prinzip arbeiten.

Die Verzahnungsmessmaschine kann eine optische Messeinrichtung aufweisen. Die optische Messeinrichtung kann ein optischer Abstandssensor sein, zum Beispiel ein konfokaler-chromatischer Sensor, ein Laserdistanzmesssystem oder dergleichen.

Weiter betrifft die Erfindung ein Fertigungssystem, mit einem Wälzprüfstand zur Wälzprüfung verzahnter Bauteile; mit einer Verzahnungsmessmaschine zum Messen verzahnter Bauteile; mit einer Steuereinrichtung, wobei die Steuereinrichtung zur Steuerung des Fertigungssystems zur Durchführung eines erfindungsgemäßen Verfahrens eingerichtet ist.

Das Fertigungssystem kann eine Verzahnmaschine zur Hartfeinbearbeitung verzahnter Bauteile aufweisen.

Nachfolgend wird die Erfindung anhand einer Ausführungsbeispiele darstellenden Zeichnung näher erläutert. Es zeigen jeweils schematisch:
- Fig. 1: einen Ablaufplan eines erfindungsgemäßen Verfahrens;
- Fig. 2: ein Ergebnis einer Wälzprüfung;
- Fig. 3: eine Verzahnungsmessmaschine;
- Fig. 4: eine Teilungsmessung;
- Fig. 5: eine Flanken-, Profil- und Welligkeitsmessung;
- Fig. 6: eine Verzahnmaschine zum Verzahnungsschleifen;
- Fig. 7: eine Hartfeinbearbeitung als kontinuierliches Wälzschleifen mit einer abrichtbaren Schleifschnecke;

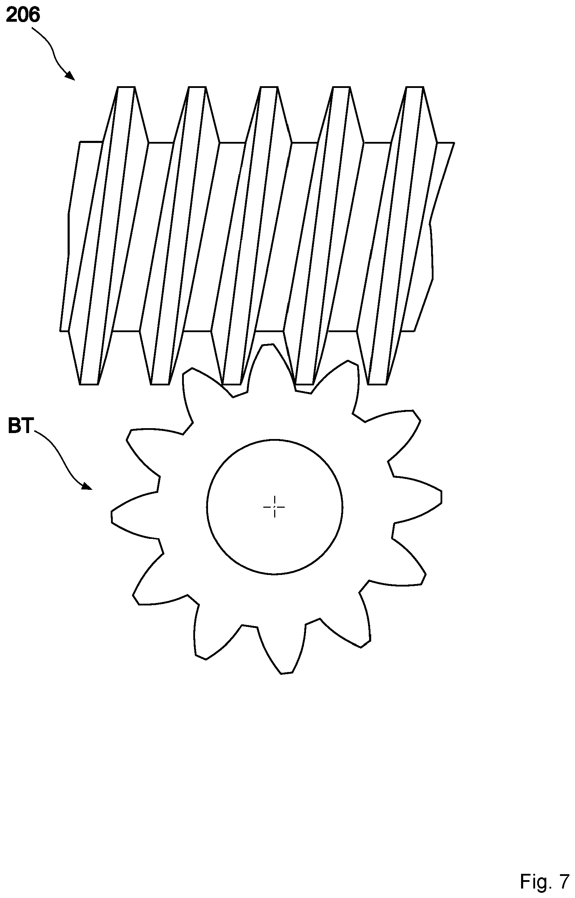

- Fig. 7: einen Prüfstand zur Einflankenwälzprüfung;

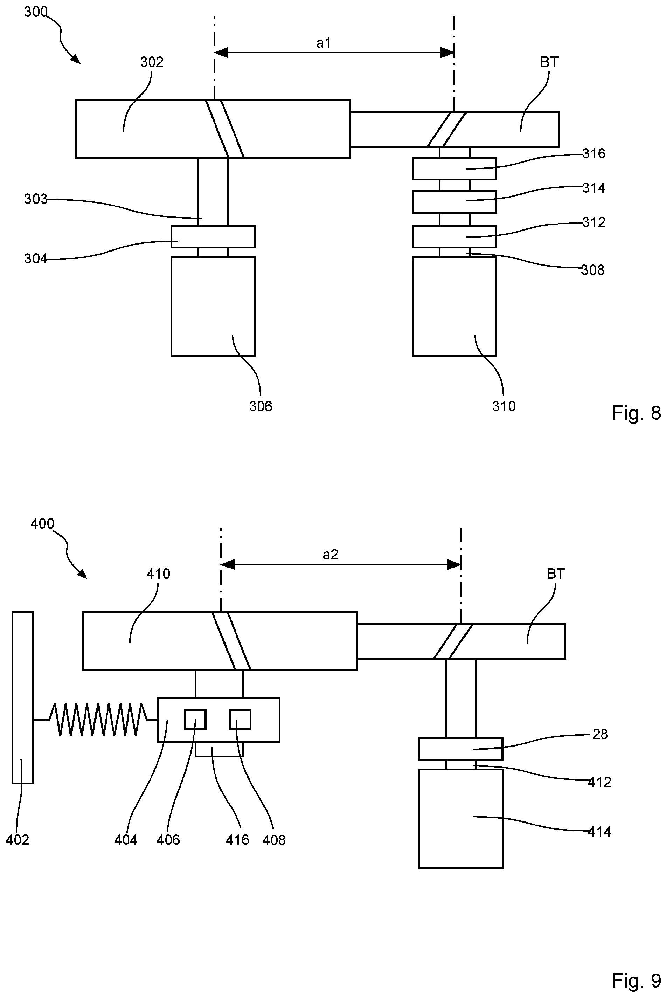

- Fig. 9: einen Prüfstand zur Zweiflankenwälzprüfung;

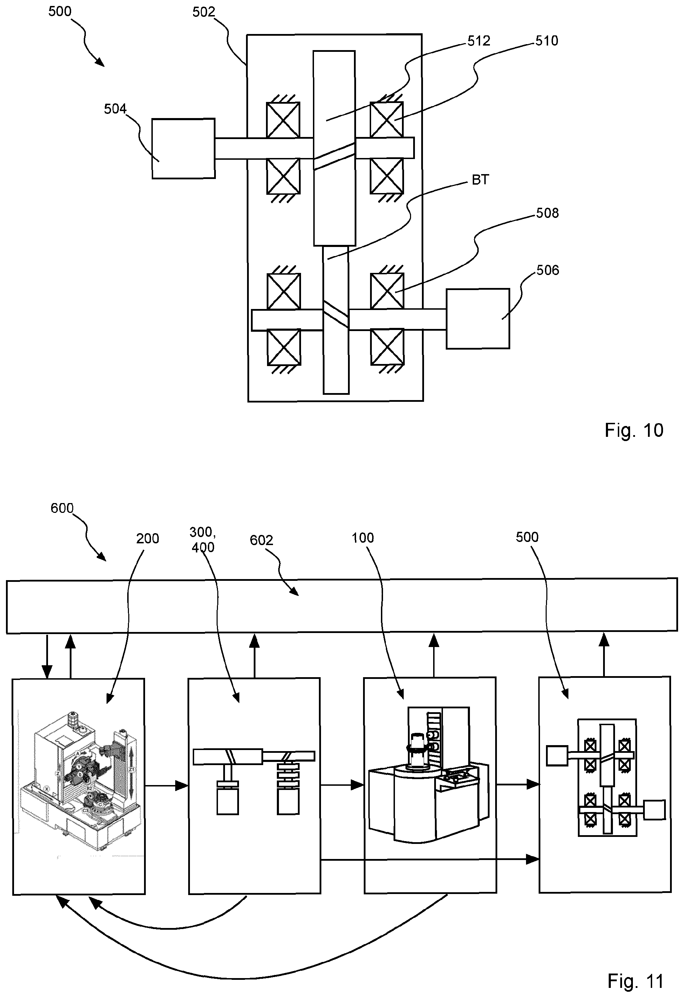

- Fig. 10: einen End-of-Line Prüfstand;
- Fig. 11: ein erfindungsgemäßes Fertigungssystem.

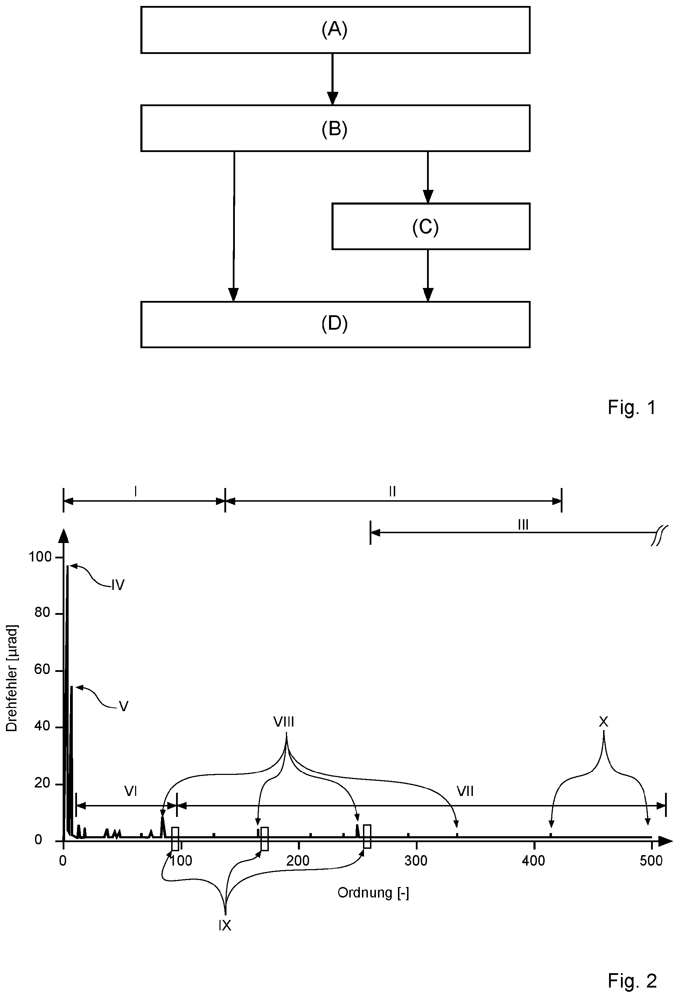

Fig. 1 zeigt einen Ablaufplan eines erfindungsgemäßen Verfahrens. Der Ablauf gemäß Fig. 1 wiederholt sich in einer Serienfertigung gemäß der Erfindung für jedes zu bearbeitende verzahnte Bauteil und wird nachstehend exemplarisch und schematisch für ein verzahntes Bauteil beschrieben.

Erfindungsgemäß erfolgt in einem Verfahrensschritt (A) zunächst eine Hartfeinbearbeitung eines verzahnten Bauteils.

Das dem Verfahrensschritt (A) zugeführte verzahnte Bauteil ist vor der Hartfeinbearbeitung insbesondere vorverzahnt und gehärtet worden.

Das Vorverzahnen kann beispielsweise durch Fräsen erfolgt sein, insbesondere durch Wälzfräsen. Es versteht sich, dass gemäß alternativer Ausführungsbeispiele auch andere Verfahren zum Vorverzahnen verwendet werden können, insbesondere Verfahren zum Zerspanen mit geometrisch bestimmter Schneide, die zum Beispiel das Wälzschälen oder dergleichen.

In einem Verfahrensschritt (B) erfolgt nach der Hartfeinbearbeitung eine Wälzprüfung des verzahnten Bauteils. In Abhängigkeit von einem Ergebnis der Wälzprüfung werden ein Messbedarf und ein Umfang der Verzahnungsmessung für das verzahnte Bauteil bauteilspezifisch bestimmt.

Sofern die Wälzprüfung gemäß Verfahrensschritt (B) ergeben hat, dass ein Messbedarf vorliegt, wird für das verzahnte Bauteil in einem Verfahrensschritt (C) eine Verzahnungsmessung durchgeführt, und zwar entsprechend des im Rahmen der Wälzprüfung bestimmten Umfangs.

Nach der Verzahnungsmessung wird das verzahnte Bauteil einer End-of-Line Prüfung gemäß einem Verfahrensschritt (D) zugeführt.

Sofern der Verfahrensschritt (B) ergeben hat, dass kein Messbedarf vorliegt, wird für das verzahnte Bauteil keine Verzahnungsmessung durchgeführt, sondern das verzahnte Bauteil wird nach der Wälzprüfung unmittelbar der End-of-Line Prüfung gemäß Verfahrensschritt (D) zugeführt. Die End-of-Line Prüfung kann gemäß alternativer Ausführungsbeispiele der Erfindung wegfallen.

Aus dem Ablaufplan gemäß Fig. 1 ist zu erkennen, dass für jedes verzahnte Bauteil eine Wälzprüfung durchgeführt wird. Weiter wird für jedes verzahnte Bauteil eine End-of-Line Prüfung durchgeführt. Nicht jedes verzahnte Bauteil wird jedoch der Verzahnungsmessung zugeführt.

Wie einleitend in diesem Text bereits erwähnt, stellt die Verzahnungsmessung den zeitintensivsten Prozessschritt der dargestellten Verfahrensschritte dar. Aus diesem Grund wird anhand der Ergebnisse der Wälzprüfung zunächst entschieden, ob das verzahnte Bauteil überhaupt einer Verzahnungsmessung unterzogen werden muss, und wenn ja, in welchem Umfang diese Verzahnungsmessung erfolgen muss, d. h., welche Prüfmerkmale bzw. welche zu messenden Parameter mittels der Verzahnungsmessung tatsächlich an dem verzahnten Bauteil erfasst werden müssen.

In einer Serienfertigung, die für jedes verzahnte Bauteil einen Ablauf gemäß Fig. 1 vorsieht, ist daher insbesondere vorgesehen, dass eine Anzahl der verzahnten Bauteile, für die die Wälzprüfung durchgeführt wird, größer ist, als eine Anzahl der verzahnten Bauteile, für die die Verzahnungsmessung durchgeführt wird.

Fig. 2 zeigt exemplarisch und schematisch das Ergebnis der Wälzprüfung gemäß Verfahrensschritt (B). Hierbei ist ein gemessener Drehfehler in µrad über den Ordnungen aufgetragen. Die Ordnungen sind dabei in bekannter Weise als ein Vielfaches der Drehzahl definiert. Unter Ordnungsanalyse ist die Analyse von Drehfrequenzen und deren Vielfachen zu verstehen. Mit anderen Worten handelt es sich dabei insbesondere um die Transformation der Frequenzanalyse aus einer zeitlichen Ebene in eine rotatorische Ebene. Die erste Ordnung entspricht der Drehfrequenz während der Wälzprüfung, die zweite Ordnung der doppelten Drehfrequenz der Wälzprüfung etc.. Die mittels der Wälzprüfung bestimmten Abweichungen werden somit als Ordnungsspektrum bereitgestellt und zwar mit Ordnungen, die einem Vielfachen der Drehfrequenz während der Wälzprüfung entsprechen. Hierbei können einzelnen Ordnungen oder Ordnungsbereichen des Ordnungsspektrums Prüfmerkmale bzw. geometrische Abweichungen der Verzahnung des verzahnten Bauteils zugeordnet werden.

Auffälligkeiten der Wälzprüfung, die in einem Ordnungsbereich I auftreten, sind beispielsweise auf Teilungsfehler der Verzahnung des verzahnten Bauteils zurückzuführen. Der Ordnungsbereich I erstreckt sich beispielsweise von der ersten Ordnung bis zur ca. 160. Ordnung.

Auffälligkeiten der Wälzprüfung, die in einem Ordnungsbereich II auftreten, sind beispielsweise auf Abweichungen eines Profils oder einer Flanke der Verzahnung des verzahnten Bauteils zurückzuführen. Der Ordnungsbereich II erstreckt sich beispielsweise ca. von der 160. Anordnung bis hin zur 430. Ordnung.

Auffälligkeiten der Wälzprüfung, die in einem Ordnungsbereich III auftreten, sind beispielsweise auf Welligkeiten der Zahnflanken der Verzahnung des verzahnten Bauteils zurückzuführen. Der Ordnungsbereich III erstreckt sich beispielsweise von der 290. Ordnung bis über die 500. Ordnung hinaus.

Die angegebenen Werte für die Erstreckung der Ordnungsbereiche sind lediglich beispielhaft zu verstehen, um das erfindungsgemäße Vorgehen zu veranschaulichen.

Um hier ein erstes Beispiel für die Auswertung eines bauteilspezifischen Ordnungsspektrums anzugeben, wird die Annahme getroffen, dass Auffälligkeiten bzw. dominante Ordnungen für ein erstes Bauteil ausschließlich im Ordnungsbereich I auftreten, während die Amplituden der Ordnungen in den Bereichen II und III für dieses erste Bauteil völlig unauffällig sind. Hieraus kann abgeleitet werden, dass für dieses erste Bauteil beispielsweise keine zeitintensive Messung der Welligkeit der Zahnflanken erforderlich ist, da die im Rahmen der Wälzprüfung ermittelten dominanten Ordnungen deutlich auf Teilungsfehler hinweisen, und keine Problematik bezüglich Abweichungen im Bereich der Welligkeit vorliegen.

Für dieses erste verzahnte Bauteil liegt daher ein Messbedarf vor, denn es wurden dominante Ordnungen im Ordnungsbereich I festgestellt, die auf einen Teilungsfehler hindeuten. Die betreffende Verzahnung des ersten Bauteils muss daher gemäß dem Verfahren Schritt (C). Der Messumfang für dieses betreffende erste Bauteil kann jedoch zum Beispiel auf eine Teilungsmessung beschränkt werden, da aufgrund der Ergebnisse der Wälzprüfung keine Auffälligkeiten beispielsweise bezüglich der Welligkeit der Zahnflanken zu erwarten sind.

Für ein zweites Beispiel, dass die Analyse eines Ordnungsspektrums eines zweiten verzahnten Bauteils betrifft, kann jedoch der Fall auftreten, dass sowohl im Ordnungsbereich I als auch im Ordnungsbereich III dominante Ordnungen auftreten, die auf Abweichungen bezüglich der Teilung hindeuten als auch kritische Wertigkeiten auf den Oberflächen der Zahnflanken implizieren. Auch für dieses zweite Bauteil kann daher anhand der Ordnungsanalyse festgestellt werden, dass ein Messbedarf vorliegt, also eine Verzahnungsmessung für dieses zweite verzahnte Bauteil erfolgen muss. In diesem Fall ist der Messumfang im Vergleich zu dem voranstehend beschriebenen ersten Bauteil erweitert, da neben der Teilungsmessung auch eine Messung der Welligkeiten der Zahnflanken für das zweite Bauteil erfolgen muss.

Sofern ein Messbedarf festgestellt worden ist, kann daher der Umfang der Messung bauteilspezifisch definiert werden, indem anhand der Analyse des Ordnungsspektrums festgestellt wird, welche geometrischen Abweichungen der Verzahnung des betreffenden Bauteils die betreffenden dominanten Ordnungen gemäß der Analyse des Ordnungsspektrums verursachen.

Neben den vorgenannten Ordnungsbereichen I, II und III können auch einzelne Ordnungen konkret bestimmten Prüfmerkmale bzw. bestimmten geometrischen Abweichungen der betreffenden Verzahnung zugeordnet werden.

So beschreibt die erste Ordnung des Ordnungsspektrums gemäß der Wälzprüfung den Rundlauffehler einer Verzahnung, wobei der zugeordnete Drehfehler der ersten Ordnung hier mit IV bezeichnet worden ist. Die zweite Ordnung des Ordnungsspektrums gemäß der Wälzprüfung entspricht dem Taumel der Verzahnung, wobei der zugeordnete Drehfehler der zweiten Ordnung hier mit V bezeichnet worden ist.

Ein Ordnungsbereich, der mit VI bezeichnet worden ist, reicht von der dritten Ordnung der Wälzprüfung bis hin zur ersten Zahneingriffsordnung, wobei dominante Ordnungen innerhalb dieses Ordnungsbereich auf periodisch auftretende Teilungsfehler hindeuten.

Einem Ordnungsbereich, der mit VII bezeichnet wird, sind diejenigen Ordnungen der Wälzprüfung zugeordnet, die keinen Eingriffsfrequenzen oder deren harmonischen oder harmonischen Seitenwänden zuzuordnen sind, wobei dieser Ordnungen auch zusammenfassend als Geisterordnungen bezeichnet werden können.

Die einzelnen Zahneingriffsordnungen gemäß der ersten, zweiten, dritten und vierten Zahneingriffsordnungen sind vorliegend mit VIII bezeichnet.

Mit IX sind jeweils Bereiche bezeichnet, die Seitenbänder der harmonischen Eingriffsfrequenzen betreffen, die moduliert sind durch periodische Teilungsabweichung.

Zahneingriffsordnungen gemäß der fünften Zahneingriffsordnungen oder höher sind mit X bezeichnet und üblicherweise auf Welligkeiten der Oberfläche der Flanken zurückzuführen.

Es ist daher ersichtlich, dass sich aus einer Analyse eines Ordnungsspektrums der Wälzprüfung bereits einige Informationen zu den geometrischen Abweichungen einer Verzahnung eines betreffenden verzahnten Bauteils ableiten lassen. Erfindungsgemäß wird nunmehr auf Grundlage dieser Informationen ein wälzprüfgesteuerter Messbedarf ermittelt, d. h. die zeitaufwendige Messung der Verzahnungsgeometrie auf die tatsächlich notwendigen Messungen beschränkt.

Weiter bedeutet dies auch, dass keine Verzahnungsmessung durchgeführt wird, sofern sich für eine betreffende Verzahnung eines verzahnten Bauteils im Rahmen der Wälzprüfung keine Auffälligkeiten ergeben, die eine Verzahnungsmessung erforderlich machen würden.

Der Analyse des Ordnungsspektrums der Wälzprüfung können vorgegebene Qualitätsanforderungen bzw. Qualitätsmerkmale zugrunde liegen. Beispielsweise können für die Ordnungsbereiche und oder für einzelne Ordnungen absolute oder relative Grenzwerte für die Amplituden des Drehfehler vorgegeben werden, wobei eine Überschreitung eines betreffenden Grenzwerts einen Messbedarf für das entsprechend zugeordnete Prüfmerkmal auslöst.

Konkret kann beispielsweise vorgesehen sein, dass der Drehfehler erster Ordnung im Rahmen der Wälzprüfung beispielsweise maximal 20 µrad oder maximal 40 µrad oder maximal 60 µrad betragen darf. Wird dieser Wert überschritten, wie es im vorliegend gemäß Fig. 2 gezeigten Beispiel der Fall ist, so liegt ein Messbedarf für die Teilung und den Rundlauf vor.

Für den Drehfehler zweiter Ordnung, d. h. den Taumel, kann ein solcher Grenzwert für den zulässigen Drehfehler niedriger liegen. Beispielsweise kann vorgesehen sein, dass der Drehfehler zweiter Ordnung maximal 10 µrad oder 20 µrad betragen darf, sodass ein Messbedarf für das in Fig. zwei gezeigten Beispiel vorliegt, da der Drehfehler zweiter Ordnung hier ca. 55 µrad beträgt.

So können für die verschiedenen Ordnungsbereiche oder für die verschiedenen einzelnen Ordnungen Grenzwerte des zulässigen Drehfehler angegeben werden, deren Überschreiten einen Messbedarf für eines oder mehrere dem jeweiligen Ordnungsbereich oder der jeweiligen Ordnung zugeordnete Prüfmerkmale der Verzahnung auslöst.

Derartige Grenzwerte können auch relativ definiert sein, wobei beispielsweise ein Verhältnis der Drehfehler verschiedener Ordnungen gebildet werden kann, oder der Drehfehler für bestimmte Ordnungen normiert und gegenüber eines bezüglich des normierten Drehfehler definierten Grenzwerts abgeglichen wird.

Ordnungen, für die ein vorgegebener Grenzwert überschritten wird, können auch als dominante Ordnungen des Ordnungsspektrums bezeichnet werden. Alternativ kann auch davon gesprochen werden, dass bestimmte Ordnungen oder Ordnungsbereiche Auffälligkeiten aufweisen bzw. auffällig sind, sofern die Analyse des Ordnungsspektrums der Wälzprüfung die Überschreitung eines vorgegebenen Grenzwerts ergibt.

Anhand der Ergebnisse der Wälzprüfung und/oder der Ergebnisse der Verzahnungsmessung können Korrekturen für die Hartfeinbearbeitung bestimmt werden. Diese Korrekturen können beispielsweise korrigierte Achsbewegungen bzw. Korrekturwerte für Achsbewegungen für die Hartfeinbearbeitung umfassen, oder auch Korrekturen für bestimmte Fertigungsparametern wie zum Beispiel eine Zustelltiefe, einen Vorschub oder dergleichen.

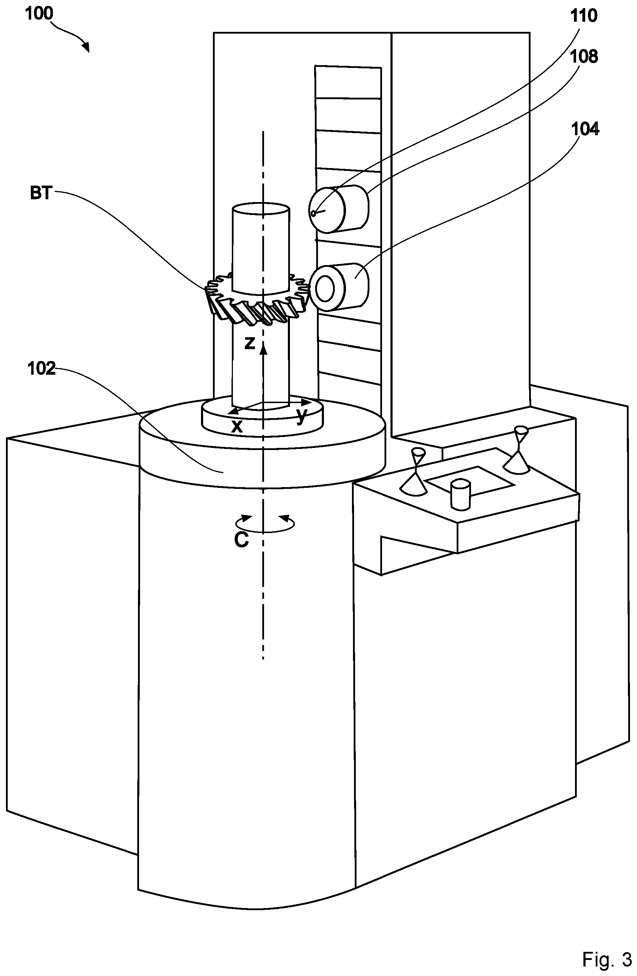

Fig. 3 zeigt eine Verzahnungsmessmaschine 100 zur Verzahnungsmessung. Ein Bauteil BT wird nachfolgend teilweise als Schrägverzahnung teilweise als Geradverzahnung dargestellt. Das Bauteil BT steht lediglich als Platzhalter für einen wie auch immer geartetes verzahntes Bauteil. Es versteht sich, dass das erfindungsgemäße Verfahren unabhängig von der Zahnform bzw. der konkreten Ausgestaltung des verzahnten Bauteils angewendet werden kann.

Die Verzahnungsmessmaschine 100 ist eine Koordinatenmessmaschine die einen Drehtisch 102 zum Aufnehmen und Drehantreiben des Bauteils BT um eine Drehachse C aufweist. Die Verzahnungsmessmaschine 100 weist eine optische Messvorrichtung 104 zur optischen Verzahnungsmessung und eine taktile Messvorrichtung 108 mit einem Messtaster 110 zur taktilen Verzahnungsmessung auf. Die Verzahnungsmessmaschine 100 kann daher als hybride Koordinatenmessmaschine bezeichnet werden, da sie sowohl eine taktile Messung als auch eine optische Messung ermöglicht.

Soweit gemäß einer Wälzprüfung demnach ein Messbedarf festgestellt worden ist, findet die entsprechende Verzahnungsmessung auf einer exemplarisch in Fig. 3 dargestellten Verzahnungsmessmaschine 100 statt.

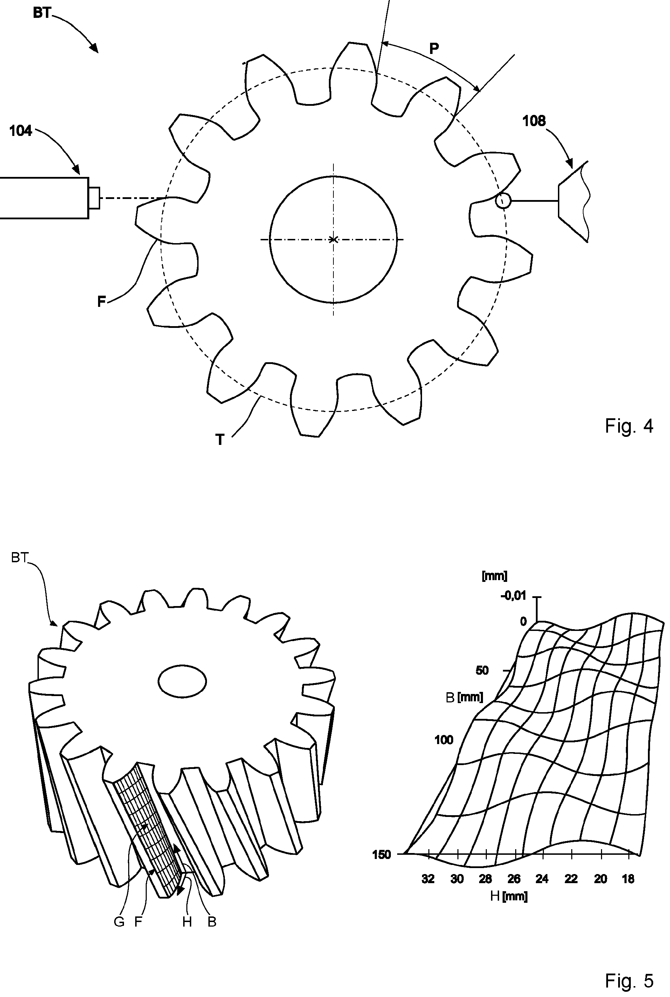

Fig. 4 zeigt exemplarisch und schematisch die Messung einer Teilung P an dem verzahnten Bauteil BT. Hierbei werden Flanken F des Bauteils BT mittels der optischen Messvorrichtung 104 oder mittels der taktilen Messvorrichtung 108 gemessen. Die Messung der Teilung P erfolgt insbesondere auf Höhe des Teilkreises T des verzahnten Bauteils BT.

Fig. 5 zeigt exemplarisch und schematisch ein als Schrägverzahnung ausgeführtes Bauteil BT. Zur Erfassung einer Welligkeit wird ein Messgitter G entlang einer Breite B und einer Höhe H zur Erfassung der gesamten Zahnflanke F definiert. Das in dieser Art festgelegte Messgitters G wird mittels taktiler Messung oder mittels optischer Messung abgefahren, um Messpunkte entsprechend des Messgitters an der Zahnflanke zu erfassen. Das Ergebnis einer solchen Messung der Welligkeit ist exemplarisch und schematisch in Fig. 5 auf der rechten Seite dargestellt, wobei Abweichungen über der Höhe und der Breite der betreffenden Zahnflanke aufgetragen sind.

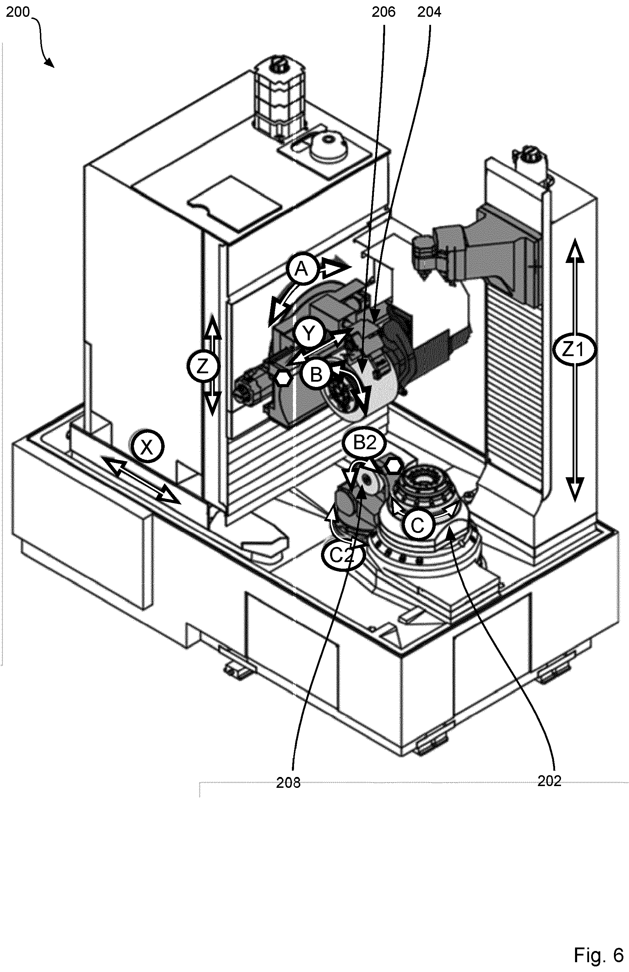

Fig. 6 zeigt exemplarisch und schematisch eine Verzahnmaschine 200 zum Verzahnungsschleifen. Die Verzahnmaschine 200 hat eine Werkstückspindel zum Aufnehmen eines zu bearbeitenden Werkstücks BT sowie eine Werkzeugspindel 204 zum Halten eines Schleifwerkzeugs, wobei das Schleifwerkzeug 206 vorliegend als abrichtbare Schleifschnecke ausgebildet ist. Die Verzahnmaschine 200 verfügt in bekannterweise über gesteuerte Maschinenachsen, um Relativbewegungen zur schleifenden Bearbeitung des verzahnten Bauteils BT auszuführen. Die entsprechenden Freiheitsgrade der Bewegung bzw. die Maschinenachsen sind vorliegend mit X, Y, Z, A, B und C bezeichnet, wobei die Achsen C2 und B2 einer Abrichtvorrichtung 208 zum Abrichten des Schleifwerkzeugs 206 zugeordnet sind. Die Achse Z1 dient zum Einspannen von wellenförmigen Bauteilen.

Fig. 7 zeigt exemplarisch und schematisch die abrichtbare Schleifschnecke 206 während der schleifenden Bearbeitung des verzahnten Bauteils BT.

Fig. 8 zeigt exemplarisch und schematisch einen Prüfstand 300 zur Einflankenwälzprüfung. Der Prüfstand 300 weist ein Lehrzahnrad 302 auf, dass zum Abwälzen mit dem zu prüfenden verzahnten Bauteil BT im Zahneingriff ist. Ein Achsabstand a1 zwischen einer Welle 303, die das Lehrzahnrad 302 trägt, und einer Welle 308, die das verzahnte Bauteil BT trägt, ist vorliegend konstant. Weiter sind Vorrichtungen bzw. Wälzprüfmaschinen bekannt, die sowohl zur Einflankenwälzprüfung als auch zur Zweiflankenwälzprüfung geeignet sind, wie z.B. die unter dem Namen R300 vertriebene Wälzprüfmaschine der Anmelderin. So sind deratige Maschinen z.B. zur Einflanken-Wälzprüfung, Körperschall- und Drehbeschleunigungsprüfung und Zweiflanken-Wälzprüfung geeignet.

Ein Drehmoment und eine Drehzahl zur Prüfung des verzahnten Bauteils BT wird über die Antriebe 310 und 306 eingestellt. Messwerte werden mittels der Sensoren 304, 312, 314 und 316 erfasst, die Winkelgeber, Drehbeschleunigungsaufnehmer und Vibrations- bzw. Geräuschsensoren sein können.

Fig. 9 zeigt exemplarisch und schematisch einen Prüfstand 400 zur Zweiflankenwälzprüfung. Ein Lehrzahnrad 410 ist auf einer Welle 416 aufgenommen, wobei die Welle 416 an einem belegbaren Schlitten 404 gehalten ist, der relativ zu einer Stützstruktur 402 verschiebbar ist. Das Lehrzahnrad ist federnd elastisch vorgespannt in Richtung des verzahnten Bauteils BT gepresst, um eine definierte Anlage im Zweiflankenkontakt zwischen dem Lehrzahnrad 410 und dem verzahnten Bauteil BT zu erzeugen. Ein Achsabstand a2 zwischen der Welle 416 und einer Welle 412, auf der das verzahnte Bauteil BT gehalten ist, ist vorliegend veränderlich. Der Welle 412 ist ein Antrieb 414 zum Drehantreiben der Welle 412 zugeordnet. Weiter sind Sensoren 406, 408 zur Messung der Veränderungen des Achsabstand a2 vorgesehen. Das Bezugszeichen 28 repräsentiert einen weiteren Sensor 28, der eine Winkelmessung und/oder eine Drehbeschleunigung Messung und/oder eine Vibrationsmessung ausführen kann.

Fig. 10 zeigt exemplarisch und schematisch einen End-of-Line Prüfstand 500, wobei das verzahnte Bauteil BT in einem Getriebegehäuse 502 montiert ist, wobei eine dem Einbauzustand entsprechende Lagerung 508,510 sowohl für das verzahnte Bauteil BT als auch für ein entsprechendes Gegenrad 512 vorgesehen ist. Es sind Antriebe 504 und 506 vorgesehen, um die gewünschten Drehzahlen und Drehmomente zur Prüfung des verzahnten Bauteils BT einzustellen. Es kann vorgesehen sein, dass das Getriebegehäuse und das verzahnte Bauteil 512 bzw. des Gegenrad 512 Teil des tatsächlich ausgelieferten Getriebes sind. Alternativ kann das Gehäuse 512 lediglich ein Gehäuse sein, dass konstruktiv identisch ist zu dem Gehäuse, in dem das betreffende verzahnte Bauteil BT im fertig montierten Zustand aufgenommen ist. Dies gilt gleichermaßen für das zugeordnete Gegenrad 512. Der End-of-Line Prüfstand 500 kann auch als Getriebeprüfstand bezeichnet werden.

Fig. 11 zeigt exemplarisch und schematisch ein Fertigungssystem 600, mit der Verzahnmaschine 200 zur Hartfeinbearbeitung verzahnten Bauteile BT, mit einem Wälzprüfstand 300 oder 400 zur Wälzprüfung verzahnter Bauteile BT, einer Verzahnungsmessmaschine 100 zum Messen verzahnter Bauteile BT und einem End-of-Line Prüfstand 500. Das Fertigungssystem 600 hat zudem eine Steuereinrichtung 602, wobei die Steuereinrichtung zur Steuerung des Fertigungssystem 600 zur Durchführung des voranstehend beschriebenen erfindungsgemäßen Verfahrens eingerichtet ist.

Demnach wird mittels der Steuereinrichtung 602 automatisiert ermittelt, ob nach der Wälzprüfung des verzahnten Bauteils ein Messbedarf vorliegt, sodass das verzahnte Bauteil BT, sofern ein Messbedarf vorliegt, der Verzahnungsmessmaschine 100 zugeführt wird und dort in bauteilspezifisch definiertem Umfang gemessen wird, oder, sofern kein Messbedarf vorliegt, nach der Wälzprüfung unmittelbar dem End-of-Line Prüfstand 500 zugeführt werden kann.

Anhand der Ergebnisse der Verzahnungsmessung mittels der Verzahnungsmessmaschine 100 können Korrekturen für die Verzahnungsschleifmaschine 200 abgeleitet werden. Gleichermaßen können anhand der Ergebnisse der Wälzprüfung Korrekturen für die Verzahnungsschleifmaschine bestimmt werden.

## Patentansprüche

1. Verfahren, mit den Verfahrensschritten:
- Wälzprüfung von verzahnten Bauteilen; und
- Verzahnungsmessung zumindest einer Teilmenge der verzahnten Bauteile; **dadurch gekennzeichnet, dass**
- ein Messbedarf und ein Umfang der Verzahnungsmessung bauteilspezifisch in Abhängigkeit von einem Ergebnis der Wälzprüfung bestimmt werden.

2. Verfahren nach Anspruch 1,
**dadurch gekennzeichnet, dass**
für jedes verzahnte Bauteil eine Wälzprüfung durchgeführt wird.

3. Verfahren nach Anspruch 1 oder 2,
**dadurch gekennzeichnet, dass**
eine Anzahl der verzahnten Bauteile, für die die Wälzprüfung durchgeführt wird,
größer ist als eine Anzahl der verzahnten Bauteile, für die die Verzahnungsmessung durchgeführt wird.

4. Verfahren nach einem der voranstehenden Ansprüche,
**dadurch gekennzeichnet,**
**dass** für ein verzahntes Bauteil, dessen Ergebnis der Wälzprüfung vorgegebene Qualitätsanforderungen der Wälzprüfung erfüllt, kein Messbedarf vorliegt und keine Verzahnungsmessung durchgeführt wird, und
**dass** für ein verzahntes Bauteil, dessen Ergebnis der Wälzprüfung die vorgegebenen Qualitätsanforderungen der Wälzprüfung nicht erfüllt, ein Messbedarf vorliegt und eine Verzahnungsmessung durchgeführt wird.

5. Verfahren nach einem der voranstehenden Ansprüche,
**dadurch gekennzeichnet, dass**
mittels der Wälzprüfung ermittelte Abweichungen als Ordnungsspektrum bereitgestellt werden, wobei Ordnungen- und/oder Ordnungsbereichen des Ordnungsspektrums Prüfmerkmale der Verzahnung zugeordnet sind, wie Rundlauffehler; Taumel; Teilungsfehler erster Ordnung und/oder höherer Ordnungen; Oberflächenwelligkeiten, Fehler der Flankenform oder dergleichen.

6. Verfahren nach Anspruch 5,
**dadurch gekennzeichnet, dass**
anhand dominanter Ordnungen des Ordnungsspektrums bauteilspezifisch diejenigen Prüfmerkmale der Verzahnung ermittelt werden, die in der Verzahnungsmessung gemessen werden.

7. Verfahren nach Anspruch 6,
**dadurch gekennzeichnet, dass**
diejenigen Prüfmerkmale, für die in der Wälzprüfung keine dominanten Ordnungen ermittelt worden sind, keine Verzahnungsmessung durchgeführt wird.

8. Verfahren nach Anspruch 4 und nach einem der Anspruch 5, 6 oder 7,
**dadurch gekennzeichnet, dass**
die Qualitätsanforderungen der Wälzprüfung absolute oder relative Grenzwerte für Amplituden einer oder mehrerer Ordnungen des Ordnungsspektrums aufweisen.

9. Verfahren einem der Ansprüche 5 - 8,
**dadurch gekennzeichnet, dass**
ein erster Bereich des Ordnungsspektrums ein Indikator für eine erste Verzahnungsabweichung ist und dass ein zweiter Bereich des Ordnungsspektrums ein Indikator eine zweite, von der ersten Verzahnungsabweichung verschiedene zweite Verzahnungsabweichung ist, wobei dem ersten Bereich zugehörige Ordnungen kleiner sind als dem zweiten Bereich zugehörige Ordnungen und wobei eine Auffälligkeit einer Ordnung im ersten Bereich einen Messbedarf für die erste Verzahnungsabweichung auslöst und eine Auffälligkeit einer Ordnung im zweiten Bereich einen Messbedarf für die zweite Verzahnungsabweichung auslöst,
insbesondere,
ein erster Bereich des Ordnungsspektrums ein Indikator für Teilungsfehler ist und dass ein zweiter Bereich des Ordnungsspektrums ein Indikator für Abweichungen der Welligkeit ist, wobei dem ersten Bereich zugehörige Ordnungen kleiner sind als dem zweiten Bereich zugehörige Ordnungen und wobei eine Auffälligkeit einer Ordnung im ersten Bereich einen Messbedarf für eine Teilungsmessung auslöst und eine Auffälligkeit einer Ordnung im zweiten Bereich einen Messbedarf für eine Welligkeit auslöst;
und/oder
dass eine einzelne Ordnung des Ordnungsspektrums ein Indikator für eine dieser einzelnen Ordnung zugeordnete Verzahnungsabweichung ist und dass eine weitere einzelne Ordnung des Ordnungsspektrums ein Indikator für eine zweite, von der ersten Verzahnungsabweichung verschiedene, dieser weiteren einzelnen Ordnung zugeordnete weitere Verzahnungsabweichung ist, wobei die einzelne Ordnung von der weiteren einzelnen Ordnung verschieden ist und wobei eine Auffälligkeit der einzelnen Ordnung einen Messbedarf für die dieser Ordnung zugeordnete Verzahnungsabweichung auslöst und eine Auffälligkeit der weiteren einzelnen Ordnung einen Messbedarf für die dieser weiteren einzelnen Ordnung zugeordnete weitere Verzahnungsabweichung auslöst.

10. Verfahren nach einem der voranstehenden Ansprüche,
**dadurch gekennzeichnet, dass**
anhand der Ergebnisse der Wälzprüfung und/oder der Ergebnisse der Verzahnungsmessung Korrekturen für die Hartfeinbearbeitung bestimmt werden.

11. Verfahren nach einem der voranstehenden Ansprüche,
**dadurch gekennzeichnet, dass**
für ein jeweiliges verzahntes Bauteil nach der Verzahnungsmessung eine End-of-Line Prüfung mittels eines End-Of-Line Prüfstands erfolgt, wobei der End-of-Line Prüfstand insbesondere ein Getriebeprüfstand ist, oder
für ein jeweiliges verzahntes Bauteil nach der Wälzprüfung und ohne vorhergehende Verzahnungsmessung die End-of-Line Prüfung der Verzahnung mittels des End-Of-Line Prüfstands erfolgt.

12. Verfahren nach einem der voranstehenden Ansprüche,
**dadurch gekennzeichnet, dass**
- die Wälzprüfung mittels des Prüfstands zur Wälzprüfung erfolgt; und
- die Verzahnungsmessung mittels einer Koordinatenmessmaschine erfolgt.

13. Verfahren nach einem der voranstehenden Ansprüche,
**dadurch gekennzeichnet, dass**
- die verzahnten Bauteile vor der Wälzprüfung hartfeinbearbeitet werden, wobei die Hartfeinbearbeitung mittels einer Verzahnmaschine erfolgt.

14. Fertigungssystem (600),
- mit einem Wälzprüfstand (300, 400) zur Wälzprüfung verzahnter Bauteile:
- mit einer Verzahnungsmessmaschine : (100) zum Messen verzahnter Bauteile; **dadurch gekennzeichnet, dass** das Fertigungssystem eine Steuereinrichtung (602) umfasst, wobei die Steuereinrichtung zur Steuerung des Fertigungssystems zur Durchführung eines Verfahrens gemäß einem der voranstehenden Ansprüche 1 - 13 eingerichtet ist.

15. Fertigungssystem nach Anspruch 14,
**gekennzeichnet durch**
- eine Verzahnmaschine zur Hartfeinbearbeitung verzahnter Bauteile.

## Claims

1. Method, having the method steps of:
- rolling test of toothed components; and
- gearing measurement of at least a subset of the toothed components;
**characterized in that**
- a measurement requirement and a scope of the gearing measurement are determined on a component-specific basis in dependence on a result of the rolling test.

2. Method according to claim 1,
**characterized in that**
a rolling test is carried out for each toothed component.

3. Method according to claim 1 or 2,
**characterized in that**
a number of the toothed components for which the rolling test is carried out is greater than a number of the toothed components for which the gearing measurement is carried out.

4. Method according to one of the preceding claims,
**characterized in that**
for a toothed component whose result of the rolling test meets specified quality requirements of the rolling test, there is no need for measurement and no gearing measurement is carried out, and
**in that** for a toothed component whose result of the rolling test does not meet the specified quality requirements of the rolling test, there is a need for measurement and a gearing measurement is carried out.

5. Method according to one of the preceding claims,
**characterized in that**
deviations determined by means of the rolling test are provided as an order spectrum, wherein individual orders and/or order ranges of the order spectrum are assigned test features of the gearing, such as runout errors; wobble; pitch errors of the first order and/or higher orders; surface waviness, errors of the flank shape or the like.

6. Method according to claim 5,
**characterized in that**
those test characteristics of the gearing which are measured in the gearing measurement are determined component-specifically on the basis of dominant orders of the order spectrum.

7. Method according to claim 6,
**characterized in that**
for those test characteristics for which no dominant orders have been determined in the rolling test no gearing measurement is carried out.

8. Method according to claim 4 and according to one of claims 5, 6 or 7,
**characterized in that**
the quality requirements of the rolling test have absolute or relative limit values for amplitudes of one or more orders of the order spectrum.

9. Method according to one of claims 5-8,
**characterized in that** a first range of the order spectrum is an indicator for a first gearing deviation and **in that** a second range of the order spectrum is an indicator for a second gearing deviation which is different from the first gearing deviation, wherein orders associated with the first range are smaller than orders associated with the second range and wherein an abnormality of an order in the first range triggers a measurement requirement for the first gearing deviation and an abnormality of an order in the second range triggers a measurement requirement for the second gearing deviation, in particular, a first range of the order spectrum is an indicator for pitch errors and **in that** a second range of the order spectrum is an indicator of deviations of the waviness, wherein orders associated with the first range are smaller than orders associated with the second range and wherein an abnormality of an order in the first range triggers a measurement requirement for a pitch measurement and an abnormality of an order in the second range triggers a measurement requirement for a waviness;
and/or
**in that** a single order of the order spectrum is an indicator for a gearing deviation assigned to this single order and **in that** a further single order of the order spectrum is an indicator for a second gearing deviation different from the first gearing deviation and assigned to this further single order, wherein the single order is different from the further single order and wherein an abnormality of the single order triggers a measurement requirement for the gearing deviation assigned to this order and an abnormality of the further single order triggers a measurement requirement for the further gearing deviation assigned to this further single order.

10. Method according to one of the preceding claims,
**characterized in that**
corrections for the hard finishing process are determined on the basis of the results of the rolling test and/or the results of the gearing measurement.

11. Method according to one of the preceding claims,
**characterized in that**
an end-of-line test is carried out for a respective toothed component after the gearing measurement by means of an end-of-line test bench, wherein the end-of-line test bench is in particular a gear test bench, or the end-of-line test of the gearing is carried out for a respective toothed component after the rolling test and without preceding gearing measurement by means of the end-of-line test bench.

12. Method according to one of the preceding claims,
**characterized in that**
- the rolling test is performed using the rolling test bench; and
- the gearing is measured using a coordinate measuring machine.

13. Method according to one of the preceding claims, **characterized in that**
- the toothed components are hard-finished before the rolling test, wherein the hard finishing is carried out using a gear cutting machine.

14. Production system (600),
- having a rolling test bench (300, 400) for testing toothed components;
- having a gear measuring machine (100) for measuring toothed components; **characterized in that** the production system (600) has a control device (602), wherein the control device is set up to control the production system for carrying out a method according to one of the preceding claims 1-13.

15. Production system according to claim 14,
**characterized by**
- a gear cutting machine for the hard finishing of toothed components.

## Revendications

1. Procédé comprenant les étapes suivantes :
- contrôle par roulement des composants dentés ; et
- mesure de la denture d'au moins une partie des composants dentés ;
**caractérisé en ce que**
- le besoin de mesure et l'étendue de la mesure de la denture sont déterminés spécifiquement pour chaque composant en fonction du résultat du contrôle par roulement.

2. Procédé selon la revendication 1,
**caractérisé en ce que**
un contrôle de roulement est effectué pour chaque composant denté.

3. Procédé selon la revendication 1 ou 2,
**caractérisé en ce que**
le nombre de composants dentés pour lesquels le contrôle de roulement est effectué est supérieur au nombre de composants dentés pour lesquels la mesure de denture est effectuée.

4. Procédé selon l'une des revendications précédentes,
**caractérisé en ce que**
pour un composant denté dont le résultat du contrôle de roulement satisfait aux exigences de qualité prédéfinies du contrôle de roulement, il n'y a pas besoin de mesure et aucune mesure de denture n'est effectuée, et
pour un composant denté dont le résultat du test de roulement ne satisfait pas aux exigences de qualité prédéfinies du test de roulement, il y a besoin de mesure et une mesure de denture est effectuée.

5. Procédé selon l'une des revendications précédentes,
**caractérisé en ce que**
les écarts déterminés au moyen du contrôle de roulement sont fournis sous forme de spectre d'ordre, des caractéristiques de contrôle de la denture, telles que les défauts de concentricité, le balayage, erreurs de division de premier ordre et/ou d'ordres supérieurs ; ondulations de surface, erreurs de forme des flancs ou similaires.

6. Procédé selon la revendication 5,
**caractérisé en ce que**
les caractéristiques de contrôle de la denture qui sont mesurées lors de la mesure de la denture sont déterminées pour chaque composant à l'aide des ordres dominants du spectre d'ordre.

7. Procédé selon la revendication 6,
**caractérisé en ce que**
aucune mesure de denture n'est effectuée pour les caractéristiques de contrôle pour lesquelles aucun ordre dominant n'a été déterminé lors du contrôle par roulement.

8. Procédé selon la revendication 4 et selon l'une des revendications 5, 6 ou 7,
**caractérisé en ce que**
les exigences de qualité du contrôle par roulement présentent des valeurs limites absolues ou relatives pour les amplitudes d'un ou plusieurs ordres du spectre d'ordres.

9. Procédé selon l'une des revendications 5 à 8,
**caractérisé en ce qu'**
une première plage du spectre d'ordres est un indicateur d'un premier écart d'engrenage et qu'une deuxième plage du spectre d'ordres est un indicateur d'un deuxième écart d'engrenage différent du premier écart d'engrenage, les ordres associés à la première zone étant inférieurs aux ordres associés à la deuxième zone et une anomalie d'un ordre dans la première zone déclenchant un besoin de mesure pour le premier écart d'engrenage et une anomalie d'un ordre dans la deuxième zone déclenchant un besoin de mesure pour le deuxième écart d'engrenage, en particulier
une première plage du spectre d'ordre est un indicateur d'erreurs de division et qu'une deuxième plage du spectre d'ordre est un indicateur d'écarts d'ondulation, les ordres associés à la première plage étant plus petits que les ordres associés à la deuxième plage, et une anomalie d'un ordre dans la première plage déclenchant un besoin de mesure pour une mesure de division, et une anomalie d'un ordre dans la deuxième plage déclenchant un besoin de mesure pour une ondulation ;
et/ou
qu'un ordre individuel du spectre d'ordre est un indicateur d'un écart d'engrenage associé à cet ordre individuel et qu'un autre ordre individuel du spectre d'ordre est un indicateur d'un deuxième écart d'engrenage, différent du premier écart d'engrenage, associé à cet autre ordre individuel, l'ordre individuel étant différent de l'autre ordre individuel et une anomalie de l'ordre individuel déclenchant un besoin de mesure pour l'écart d'engrenage associé à cet ordre et une anomalie de l'autre ordre individuel déclenchant un besoin de mesure pour l'autre écart d'engrenage associé à cet autre ordre individuel.

10. Procédé selon l'une des revendications précédentes,
**caractérisé en ce que**
des corrections pour l'usinage de précision sont déterminées à partir des résultats du contrôle de roulement et/ou des résultats de la mesure de denture.

11. Procédé selon l'une des revendications précédentes,
**caractérisé en ce que**
pour chaque composant denté, après la mesure de denture, un contrôle de fin de ligne est effectué à l'aide d'un banc d'essai de fin de ligne, le banc d'essai de fin de ligne étant en particulier un banc d'essai de transmission, ou
pour chaque composant denté, après le test de roulement et sans mesure préalable de la denture, le contrôle de fin de ligne de la denture est effectué à l'aide du banc d'essai de fin de ligne.

12. Procédé selon l'une des revendications précédentes,
**caractérisé en ce que**
- le contrôle de roulement est effectué à l'aide du banc d'essai pour le contrôle de roulement ; et
- la mesure de la denture est effectuée à l'aide d'une machine de mesure de coordonnées.

13. Procédé selon l'une des revendications précédentes,
**caractérisé en ce que**
- les composants dentés sont soumis à un usinage de précision avant le contrôle de roulement, l'usinage de précision étant effectué à l'aide d'une machine à tailler les engrenages.

14. Système de fabrication (600),
- avec un banc d'essai de roulement (300, 400) pour le contrôle de roulement des composants dentés ;
- avec une machine de mesure des engrenages (100) pour mesurer les composants dentés ; **caractérisé en ce que** le système de fabrication (600) comprend un dispositif de commande (602), le dispositif de commande étant conçu pour commander le système de fabrication afin de mettre en œuvre un procédé selon l'une des revendications 1 à 13 ci-dessus.

15. Système de fabrication selon la revendication 14,
**caractérisé par**
- une machine à tailler les engrenages pour l'usinage de précision à froid des composants dentés.
